# EUROPÄISCHE PATENTSCHRIFT

(11) **EP 2 614 271 B1**
(45) Veröffentlichungstag und Bekanntmachung des Hinweises auf die Patenterteilung: **29.06.2016**
(21) Anmeldenummer: 11733685.9
(22) Anmeldetag: 15.07.2011
(51) Int. Cl.: F16F 9/34

(54) **DÄMPFVENTIL FÜR EINEN SCHWINGUNGSDÄMPFER**
DAMPING VALVE FOR A VIBRATION DAMPER
VANNE D'AMORTISSEMENT POUR UN AMORTISSEUR DE VIBRATIONS

(30) Priorität: 09.09.2010 DE 102010040458
(43) Veröffentlichungstag der Anmeldung: 17.07.2013
(73) Patentinhaber: ZF Friedrichshafen AG, 88038 Friedrichshafen (DE)
(72) Erfinder: KRAWCZYK, Anton, 51570 Windeck (DE); RÖSSELER, Jörg, 53809 Ruppichteroth (DE); BROOCKS, Wilhelm-Heinrich, Kürnach 97273 (DE)
(86) Internationale Anmeldenummer: PCT/EP2011/062137
(87) Internationale Veröffentlichungsnummer: WO 2012/031805

(56) Entgegenhaltungen:
- EP-A1- 0 505 773
- EP-A2- 0 481 469
- DE-A1- 2 109 398
- DE-C1- 4 410 996
- US-A1- 2006 283 676
- US-A1- 2007 034 466

## Beschreibung

Die Erfindung betrifft ein Dämpfventil gemäß dem Oberbegriff von Patentanspruch 1.

Bei einem konventionellen Schwingungsdämpfer wird Dämpfmedium infolge einer Federungsbewegung durch ein Dämpfventil verdrängt. In der Regel wird umfasst ein Dämpfventil einen Drosselkanal, dessen Austrittsseite zumindest größtenteils von einer Ventilscheibe abgedeckt wird. Wenn das Dämpfmedium in den Drosselkanal einströmt und die Ventilscheibe von der Austrittsöffnung abhebt, dann tritt zunehmend ein Geräuschproblem auf, da moderne Fahrzeuge über großflächige Karosserieteile verfügen und insgesamt ein geringeres Geräuschniveau im Fahrgastraum angestrebt wird. Ursächlich für das Geräuschproblem ist ein Kraftsprung in der Dämpfkraftentwicklung.

Aus der DE 21 09 398 C3 ist ein Dämpfventil für einen Schwingungsdämpfer bekannt, dessen Ventilkörper schräg zur Längsachse einer Kolbenstange verlaufende Drosselkanäle aufweist. Die Eintrittsöffnungen der Drosselkanäle liegen auf einem größeren Teilkreisdurchmesser als die Austrittsöffnungen. Dadurch ist es möglich, dass sämtliche Austrittsöffnungen auf einer Ventilkörperseite durch einen umlaufenden Ringgraben verbunden sind, der mittels einer äußeren ringförmigen Auflagefläche begrenzt wird. Der Ringgraben verläuft exzentrisch zur Ventilkörpermitte, so dass bei einer mittigen Anordnung mindestens einer den Ringgraben abdeckenden Ventilscheibe eine einseitige Abhubbewegung erfolgt, die sich bei zunehmender Anströmung in Umfangsrichtung fortsetzt.

Ein Dämpfventil gemäß der DE 21 09 398 C3 mit zumindest zwei Nachteilen behaftet. Zum einen ist es technisch aufwändig schräg verlaufende Drosselkanäle herzustellen. Des Weiteren steht für den Ringgraben nur der Bereich radial innerhalb des Teilkreisdurchmessers der Eintrittsöffnungen zur Verfügung. Kleinere Ventilscheiben müssen bei vergleichbarem Öffnungsverhalten dünner ausgeführt werden als größere Ventilscheiben. Dünnere Ventilscheiben sind jedoch nicht so dauerfest.

Die Aufgabe der vorliegenden Erfindung besteht darin ein gattungsbildendes Dämpfventil derart weiterzuentwickeln, so dass die bekannten Nachteile behoben sind.

Erfindungsgemäß wird die Aufgabe dadurch gelöst die Durchlasskanäle parallel zu einer Mittelachse verlaufen und ein die Ventilsitzfläche bildende Steg die Gruppe der Durchlasskanäle für die eine Durchströmungsrichtung von der Gruppe der Durchlasskanäle für die andere Durchströmungsrichtung trennt, wobei der Abstand zur Mittelachse der Ventilsitzfläche im Bereich mindestens zweier Austrittsöffnungen mindestens einer Gruppe der Durchlasskanäle unterschiedlich ausgeführt ist.

Durch die unterschiedliche Ausführung der Abstände der Ventilsitzfläche wird eine gezielte Abhubbewegung der mindestens einen Ventilscheibe sichergestellt.

Eine besonders günstige Flächenverteilung der Austritts- und Eintrittsöffnungen wird dadurch erreicht, dass die Ventilsitzfläche mäanderförmig ausgeführt ist. Praktisch wechselt sich in Umfangsrichtung eine Eintritts- mit einer Austrittsöffnung ab. Sie werden durch den Steg von einander getrennt, wobei der Steg die Eintrittsöffnungen zum Graben der Austrittsöffnungen ausgrenzt.

Um eine möglichst direkt Druckkraft auf die Ventilscheibe ausüben zu können weisen die Austrittsöffnungen der Durchlasskanäle im Wesentlichen denselben Abstand zur Ventilsitzfläche auf. Der Umlenkweg zum äußeren Rand der Ventilscheibe ist dadurch bei allen Austrittsöffnungen gleich.

In weiterer vorteilhafter Ausgestaltung weist der Dämpfventilkörper eine ungrade Anzahl von Durchlasskanälen auf und die Abstände der Ventilsitzfläche bezogen auf eine Symmetrieachse zwischen einem Durchlasskanal und der Mittelachse des Dämpfventilkörpers sind spiegelbildlich ausgeführt. Ausgehend von der Austrittsöffnung mit dem größten Abstand der Ventilsitzfläche zur Mittelachse hebt sich dadurch die Ventilscheibe symmetrisch an. Es gibt keinen ausgeprägten Verformungssprung der Ventilscheibe. Der Ventilsitzflächenbereich mit dem kleinsten Abstand und der Ventilsitzflächenbereich mit dem größten Abstand zur Mittelachse sind in Umfangsrichtung nicht direkt nebeneinander ausgeführt.

In weiterer vorteilhafter Ausgestaltung weist der Durchlasskanal für mindestens eine Durchströmungsrichtung eine rechteckige Grundform und die Austrittsöffnung mehrere trichterförmige Übergänge auf. Das Ziel dieser Maßnahme ist eine möglichst turbolenzfreie Strömung aus dem Durchlasskanal in den Graben.

Von den mehreren Übergängen ist gemäß einem vorteilhaften Unteranspruch mindestens ein trichterförmiger Übergang nach radial außen ausgerichtet.

Des Weiteren kann mindestens ein trichterförmiger Übergang in Umfangsrichtung des Grabens verlaufen.

Optional ist mindestens ein Durchtrittskanal für eine Durchströmungsrichtung als ein Langloch ausgeführt. Das Langloch kann in Umfangsrichtung gekrümmt ausgeführt sein, um den Oberflächenbereich des Dämpfventilkörpers optimal ausnutzen zu können.

Es besteht die Möglichkeit, dass die Austrittsöffnung radial außen eine größere Breite aufweist als radial innen. Zwar liegt ein langlochförmiger Durchgangskanal vor, der jedoch im Bereich der Austrittsöffnung in seiner flächigen Erstreckung erweitert ist, um eine möglichst große druckbeaufschlagte Fläche an einer Ventilscheibe zu erreichen.

Im Hinblick auf eine Maximierung der druckbeaufschlagten Fläche weist die Austrittsöffnung im Bereich der Eintrittsöffnung für den Durchtrittskanal der entgegen gesetzten Strömungsrichtung eine im Wesentlichen parallele Dichtkante auf.

Anhand der folgenden Figurenbeschreibung soll die Erfindung näher erläutert werden.

Es zeigt:
- Fig. 1: Schnittdarstellung durch ein Dämpfventil
- Fig. 2: Draufsicht auf einen Dämpfventilkörper mit einer Ventilsitzfläche für eine erste Durchströmungsrichtung
- Fig. 3: Schnittdarstellung des Dämpfventilkörpers nach Fig. 1
- Fig. 4: Draufsicht des Dämpfventilkörpers mit einer Ventilsitzfläche für eine zweite Durchströmungsrichtung
- Fig. 5: Perspektivische Darstellung des Kolbens gemäß Fig. 2
- Fig. 6: Perspektivische Darstellung des Kolbens gemäß Fig. 4

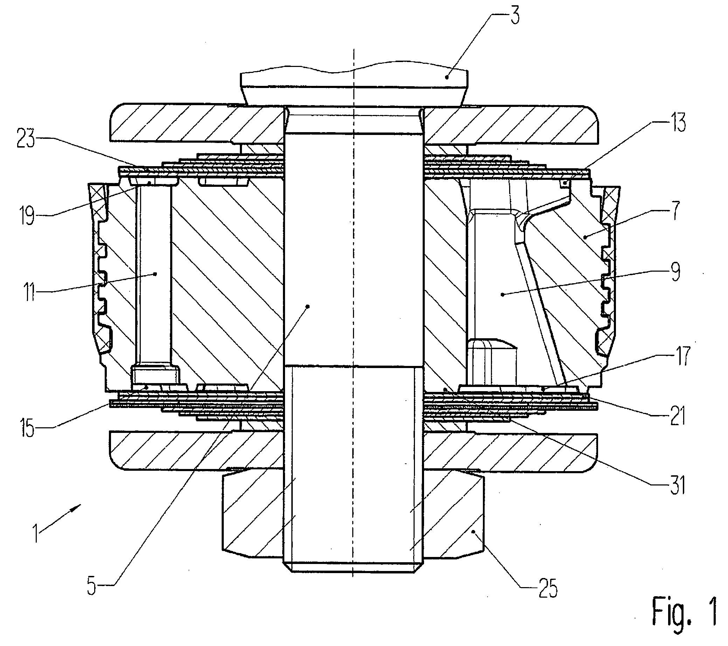

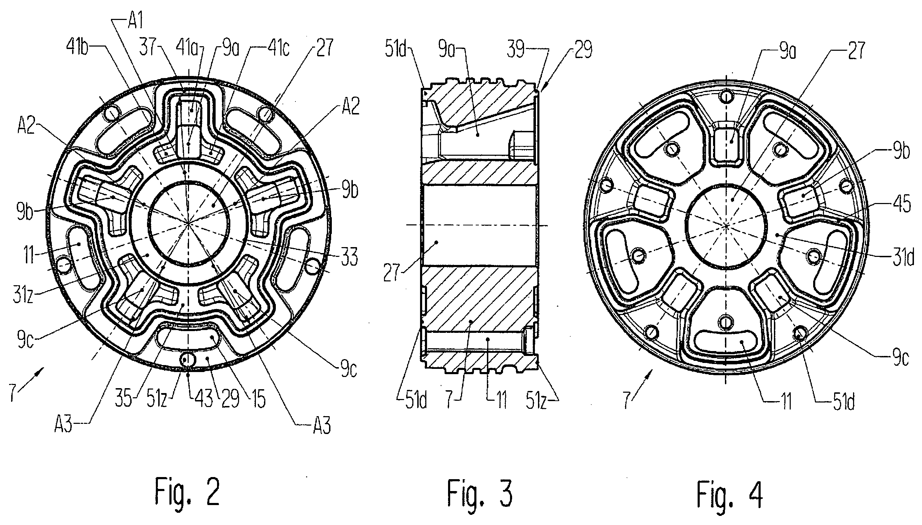

Die Figur 1 zeigt ein Dämpfventil 1 für einen Schwingungsdämpfer beliebiger Bauart. Das Dämpfventil 1 ist an einer Kolbenstange 3 ausgeführt, von der lediglich ein Kolbenstangenzapfen 5 dargstellt ist. In der Zusammenschau mit den Fig. 2 bis 6 ist erkennbar, dass ein Dämpfventilkörper 7 des Dämpfventils 1 zwei getrennte Gruppen von Durchlasskanälen 9; 11 aufweist, die sich im Wesentlichen parallel zur Mittelachse des Dämpfventils 1 erstrecken. Die Mittelachse des Dämpfventils 1 ist deckungsgleich mit der Längsachse der Kolbenstange 3 bzw. dem Kolbenstangenzapfen 5. Die beiden Gruppen von Durchlasskanälen 9; 11 werden im Betrieb des Dämpfventils von einem Dämpfmedium entgegengesetzt durchströmt. Dabei gelangt das Dämpfmedium über Eintrittsöffnungsöffnungen 13; 15 in die Durchlasskanäle 9; 11, deren Austrittsöffnungen 17; 19 von mindestens einer Ventilscheibe 21; 23 abgedeckt werden. In der Fig. 1 ist beispielhaft eine Ventilscheibenanordnung dargestellt. Zahlreiche Variationen sind denkbar. Mittels einer Mutter 25 ist das komplette Dämpfventil 1 an der Kolbenstange 3 fixiert.

Wie aus der Zusammenschau der Fig. 1 bis 6 erkennbar ist, verfügt der Dämpfventilkörper über eine zentrale Öffnung 27 zur Aufnahme des Kolbenstangenzapfens 5. Auf einer ersten Deckseite des Dämpfventilkörpers 7, im Weiteren Zugseite 29 genannt, Fig. 2, ist eine kreisringförmige Spannfläche 31z für die mindestens eine Ventilscheibe 21 ausgeführt. Der äußere Rand 33 der Spannfläche 31z begrenzt eine umlaufende Rinne 35, die von einer geschlossenen mäanderförmigen Ventilsitzfläche 37, die von einem erhabenen Steg 39 gebildet wird, radial außen abgeschlossen ist. Innerhalb der Rinne 35 sind fünf Durchlasskanäle 9a - 9c angeordnet, deren Austrittsöffnungen 17 in der Rinne 35 auslaufen. Die Durchlasskanäle 9a - 9d befinden sich alle auf einem gemeinsamen Teilkreisdurchmesser und verfügen über einen rechteckige Grundform. Jede Austrittsöffnung 17 dieser Gruppe von Durchlasskanälen 9a - 9 c verfügt über mehrere trichterförmige Übergänge 41a - 41 c, die die Strömungsoberfläche zwischen den Durchlasskanälen 9a - 9c und dem Rinnengrund bilden. Mindestens einer der trichterförmigen Übergänge 41 a jeder Austrittsöffnung ist nach radial außen gerichtet. Der radiale Abstand des radial äußeren Trichterrands 41 a zur Ventilsitzfläche 37 ist zwar bei allen Austrittsöffnung maßlich gleich ausgeführt, jedoch ist der Abstand A₁ der Ventilsitzfläche 37 zur Mittelachse im Bereich einer Austrittsöffnung 9a unterschiedlich zum Abstand A₂ einer Ventilsitzfläche bzw. eines Ventilsitzflächenbereich einer zweiten Austrittsöffnung 9b zur Mittelachse ausgeführt. Es gilt A₁ > A₂ > A₃. Der Trichterwinkel der Übergänge 41 variiert geringfügig, da die Durchlasskanäle 9a, 9b, 9c auf einem Teilkreis angeordnet sind. Zusätzlich verfügt der Durchlasskanal 9 über mindestens einen trichterförmigen Übergang 41b; 41 c in Umfangsrichtung des Grabens.

Es wurde bereits erwähnt, dass der Dämpfventilkörper 7 fünf Durchlasskanäle 9a; 9b; 9c und damit eine ungerade Anzahl von Durchlasskanälen aufweist. Die Abstände A₂; A₂; A₃ der Ventilsitzfläche 37 bezogen auf eine Symmetrieachse 43 zwischen dem Durchlasskanal 9a und der Mittelachse des Dämpfventilkörpers 7 sind spiegelbildlich ausgeführt.

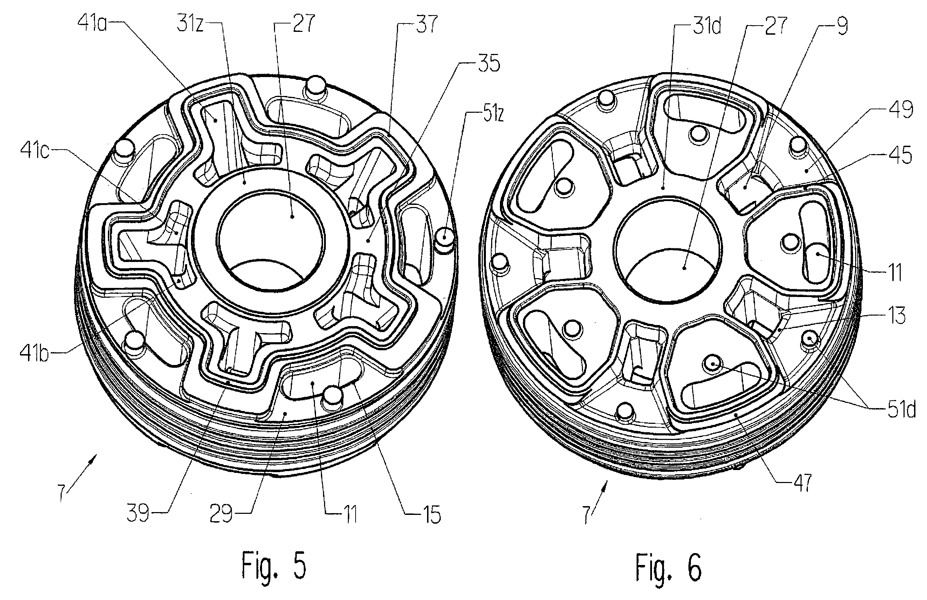

In den Umfangsbereichen mit der geringsten Rinnenbreite sind die Durchlasskanäle 11 für die andere Durchströmungsrichtung angeordnet. Diese Durchlasskanäle 11 sind als Langloch ausgeführt, wie in der Fig. 2 ersichtlich ist, die die Eintrittsöffnung 15 dieser Durchlasskanäle 11 zeigt. In den Fig. 4 und 6 wird deutlich, dass die Austrittsöffnungen 19 der Durchlasskanäle radial außen eine größere Breite als radial innen und damit eine kleeblattähnliche Form aufweisen. Die Austrittsöffnungen 19 werden von erhabenen Ventilsitzflächen 45 eingerahmt, die auf einer zweiten Deckseite 47, im Weiteren Druckseite, an eine kreisringförmige Spannfläche 31 d angeschlossen sind. Die Ventilsitzflächen 45 weisen im Bereich der Eintrittsöffnungen 13 für die Durchtrittskanäle 9 der entgegen gesetzten Strömungsrichtung eine dazu im Wesentlichen parallele Dichtkante auf. Des Weiteren begrenzen radial verlaufende Abschnitte der Ventilsitzfläche 45 einen Zuflusstrichter 49 für die Durchlasskanäle 9.

Zur Abstützung der Ventilscheiben 21; 23 auf der Druckseite 47 wie auch auf der Zugseite 29 können Unterstützungsflächen 51 d; 51z angeordnet sein, die in der Höhenniveaulage der Ventilsitzflächen 37; 45 ausgeführt sind.

Bei einer Druckbeaufschlagung der mindestens einen Ventilscheibe 21 über Dämpfmedium in der Rinne 35 herrscht dort zwar in Grenzen an jeder Stelle derselbe Druck, jedoch ist der Hebelarm der Druckkraft in der Rinne auf die mindestens eine Ventilscheibe 21 an einer Austrittsöffnung des Durchlasskanals 9a und dem dort verlaufenden Ventilsitzbereich am längsten. Folglich wird die Ventilscheibe 21 an dieser Stelle zuerst von der Ventilsitzfläche 37 abheben und Dämpfmedium kann aus der Rinne 35 abfließen. Steigt der Druck weiter an, dann erfolgt ausgehend zu diesem Ventilsitzflächenbereich beidseitig spiegelbildlich zur Symmetrieachse 43 eine in Umfangsrichtung vermindert verlaufenden Abhubbewegung der Ventilscheibe 21. Bei einer ausreichend großen Druckbeaufschlagung der Ventilscheibe 21 hebt diese vollständig von der Ventilsitzfläche 37 ab.

### Bezugszeichenliste

- 1: Dämpfventil
- 3: Kolbenstange
- 5: Kolbenstangenzapfen
- 7: Dämpfventilkörper
- 9; 11: Durchlasskanäle
- 13; 15: Eintrittsöffnungen
- 17; 19: Austrittsöffnungen
- 21; 23: Ventilscheibe
- 25: Mutter
- 27: zentrale Öffnung
- 29: Zugseite
- 31 d: Spannfläche, druckseitig
- 31 z: Spannfläche, zugseitig
- 33: äußerer Rand der Spannfläche 31z
- 35: Rinne
- 37: Ventilsitzfläche
- 39: Steg
- 41a, 41b, 41c: trichterförmige Übergänge
- 43: Symmetrieachse
- 45: Ventilsitzfläche (druckseitig)
- 47: Druckseite
- 49: Zuflusstrichter
- 51d, 51z: Unterstützungsflächen

## Patentansprüche

1. Dämpfventil (1) für einen Schwingungsdämpfer, umfassend einen Dämpfventilkörper (7) mit getrennten Durchlasskanälen (9; 11) für unterschiedliche Durchströmungsrichtungen, wobei Austrittsöffnungen (17) mindestens zweier Durchlasskanäle (9a; 9b) über eine Rinne (35) miteinander verbunden sind und mindestens eine die Rinne (35) abdeckende auf einer Ventilsitzfläche (37) aufliegende Ventilscheibe (21) an einer definierten Stelle zuerst und dann von dort ausgehend nachfolgend am weiteren Umfang abhebt,
**dadurch gekennzeichnet,**
**dass** die Durchlasskanäle (9; 11) parallel zu einer Mittelachse des Dämpfventilkörpers (7) verlaufen und ein die Ventilsitzfläche (37) bildender Steg (39) die Gruppe der Durchlasskanäle (9) für die eine Durchströmungsrichtung von der Gruppe der Durchlasskanäle (11) für die andere Durchströmungsrichtung trennt, wobei die Abstände (A₁; A₂; A₃) der Ventilsitzfläche (37) zur Mittelachse im Bereich mindestens zweier Austrittsöffnungen (9a; 9b; 9c) mindestens einer Gruppe der Durchlasskanäle unterschiedlich ausgeführt sind.

2. Dämpfventil nach Anspruch 1
**dadurch gekennzeichnet,**
**dass** die Ventilsitzfläche (37) mäanderförmig ausgeführt ist.

3. Dämpfventil nach Anspruch 1,
**dadurch gekennzeichnet,**
**dass** die Austrittsöffnungen (17) der Durchlasskanäle (9) im Wesentlichen denselben radialen Abstand zur Ventilsitzfläche (37) aufweisen.

4. Dämpfventil nach Anspruch 1,
**dadurch gekennzeichnet,**
**dass** der Dämpfventilkörper (7) eine ungrade Anzahl von Durchlasskanälen (9) aufweist und die Abstände (A₂; A₃) der Ventilsitzfläche (37) bezogen auf eine Symmetrieachse (43) zwischen einem Durchlasskanal (9a) und der Mittelachse des Dämpfventilkörpers (7) spiegelbildlich ausgeführt sind.

5. Dämpfventil nach Anspruch 1,
**dadurch gekennzeichnet,**
**dass** der Durchlasskanal (9) für mindestens eine Durchströmungsrichtung eine rechteckige Grundform aufweist und die Austrittsöffnung (17) mehrere trichterförmige Übergänge (41a; 41b; 41 c) aufweist.

6. Dämpfventil nach Anspruch 5,
**dadurch gekennzeichnet,**
**dass** mindestens ein trichterförmiger Übergang (41) nach radial außen ausgerichtet ist.

7. Dämpfventil nach Anspruch 5,
**dadurch gekennzeichnet,**
**dass** mindestens ein trichterförmiger Übergang (41b; 41 c) in Umfangsrichtung der Rinne (35) verläuft.

8. Dämpfventil nach Anspruch 1,
**dadurch gekennzeichnet,**
**dass** der mindestens eine Durchtrittskanal (11) für eine Durchströmungsrichtung als ein Langloch ausgeführt ist.

9. Dämpfventil nach Anspruch 8,
**dadurch gekennzeichnet,**
**dass** die Austrittsöffnung (19) radial außen eine größere Breite aufweist als radial innen.

10. Dämpfventil nach Anspruch 8,
**dadurch gekennzeichnet,**
**dass** die Austrittsöffnung (19) im Bereich der Eintrittsöffnung (13) für den Durchtrittskanal (9) der entgegen gesetzten Strömungsrichtung eine im Wesentlichen parallele Dichtkante aufweist.

## Claims

1. Damping valve (1) for a vibration damper, comprising a damping valve body (7) with separate passage ducts (9; 11) for different throughflow directions, outlet openings (17) of at least two passage ducts (9a; 9b) being connected to one another via a channel (35), and at least one valve plate (21) which covers the channel (35) and rests on a valve seat face (37) lifting up first of all at a defined location and then, starting from there, lifting up subsequently on the further circumference, **characterized in that** the passage ducts (9; 11) run parallel to a centre axis of the damping valve body (7), and a web (39) which forms the valve seat face (37) separates the group of passage ducts (9) for the one throughflow direction from the group of passage ducts (11) for the other throughflow direction, the spacings (A₁; A₂; A₃) of the valve seat face (37) from the centre axis being of different configuration in the region of at least two outlet openings (9a; 9b; 9c) of at least one group of passage ducts.

2. Damping valve according to Claim 1, **characterized in that** the valve seat face (37) is of meandering configuration.

3. Damping valve according to Claim 1, **characterized in that** the outlet openings (17) of the passage ducts (9) are at substantially the same radial spacing from the valve seat face (37).

4. Damping valve according to Claim 1, **characterized in that** the damping valve body (7) has an odd number of passage ducts (9), and the spacings (A₂; A₃) of the valve seat face (37) are of mirror-symmetrical configuration in relation to an axis of symmetry (43) between a passage duct (9a) and the centre axis of the damping valve body (7).

5. Damping valve according to Claim 1, **characterized in that** the passage duct (9) for at least one throughflow direction has a rectangular basic shape, and the outlet opening (17) has a plurality of funnel-shaped transitions (41a; 41b; 41c).

6. Damping valve according to Claim 5, **characterized in that** at least one funnel-shaped transition (41) is oriented radially outwards.

7. Damping valve according to Claim 5, **characterized in that** at least one funnel-shaped transition (41b; 41c) runs in the circumferential direction of the channel (35).

8. Damping valve according to Claim 1, **characterized in that** the at least one passage duct (11) for a throughflow direction is configured as a slot.

9. Damping valve according to Claim 8, **characterized in that** the outlet opening (19) has a greater width radially on the outside than radially on the inside.

10. Damping valve according to Claim 8, **characterized in that** the outlet opening (19) has a substantially parallel sealing edge in the region of the inlet opening (13) for the passage duct (9) of the opposite flow direction.

## Revendications

1. Soupape d'amortissement (1) pour un amortisseur de vibrations, comprenant un corps de soupape d'amortissement (7) avec des canaux de passage séparés (9 ; 11) pour différentes directions d'écoulement, des ouvertures de sortie (17) d'au moins deux canaux de passage (9a ; 9b) étant connectées l'une à l'autre par le biais d'une rigole (35) et au moins un disque de soupape (21) recouvrant la rigole (35) et reposant sur une surface de siège de soupape (37) se soulevant à un endroit défini en premier lieu puis de là subséquemment au niveau du reste de la périphérie,
**caractérisée en ce que**
les canaux de passage (9 ; 11) s'étendent parallèlement à un axe médian du corps de soupape d'amortissement (7) et une nervure (39) formant la surface de siège de soupape (37) sépare le groupe des canaux de passage (9) pour l'une des directions d'écoulement du groupe des canaux de passage (11) pour l'autre direction d'écoulement, les distances (A₁ ; A₂ ; A₃) de la surface de siège de soupape (37) à l'axe médian dans la région d'au moins deux ouvertures de sortie (9a ; 9b ; 9c) d'au moins un groupe des canaux de passage étant réalisées différemment.

2. Soupape d'amortissement selon la revendication 1, **caractérisée en ce que**
la surface de siège de soupape (37) est réalisée en forme de méandres.

3. Soupape d'amortissement selon la revendication 1,
**caractérisée en ce que**
les ouvertures de sortie (17) des canaux de passage (9) présentent essentiellement la même distance radiale à la surface de siège de soupape (37).

4. Soupape d'amortissement selon la revendication 1,
**caractérisée en ce que**
le corps de soupape d'amortissement (7) présente un nombre impair de canaux de passage (9) et les distances (A₂ ; A₃) de la surface de siège de soupape (37), par rapport à un axe de symétrie (43) entre un canal de passage (9a) et l'axe médian du corps de soupape d'amortissement (7), sont réalisées avec une symétrie spéculaire.

5. Soupape d'amortissement selon la revendication 1,
**caractérisée en ce que**
le canal de passage (9) présente, pour au moins une direction d'écoulement, une forme de base rectangulaire et l'ouverture de sortie (17) présente plusieurs transitions en forme d'entonnoir (41a ; 41b ; 41c).

6. Soupape d'amortissement selon la revendication 5,
**caractérisée en ce**
**qu'**au moins une transition en forme d'entonnoir (41) est orientée radialement vers l'extérieur.

7. Soupape d'amortissement selon la revendication 5,
**caractérisée en ce**
**qu'**au moins une transition en forme d'entonnoir (41b ; 41c) s'étend dans la direction périphérique de la rigole (35).

8. Soupape d'amortissement selon la revendication 1,
**caractérisée en ce que**
l'au moins un canal de passage (11) pour une direction d'écoulement est réalisé sous forme de trou oblong.

9. Soupape d'amortissement selon la revendication 8,
**caractérisée en ce que**
l'ouverture de sortie (19) présente radialement à l'extérieur une plus grande largeur que radialement à l'intérieur.

10. Soupape d'amortissement selon la revendication 8,
**caractérisée en ce que**
l'ouverture de sortie (19) dans la région de l'ouverture d'entrée (13) pour le canal de passage (9) de la direction d'écoulement opposée présente une arête d'étanchéité essentiellement parallèle.
